(19) Europäisches Patentamt / European Patent Office / Office européen des brevets

(11) **EP 3 733 269 A1**

(12) **EUROPEAN PATENT APPLICATION**
published in accordance with Art. 153(4) EPC

(43) Date of publication:
**04.11.2020 Bulletin 2020/45**

(21) Application number: **18895569.4**

(22) Date of filing: **18.12.2018**

(51) Int Cl.:
**B01D 69/08** (2006.01)   **B01D 69/02** (2006.01)
**B01D 69/10** (2006.01)   **B01D 69/12** (2006.01)
**B01D 71/34** (2006.01)   **B01D 71/38** (2006.01)
**B01D 71/44** (2006.01)   **B01D 71/56** (2006.01)
**B01D 71/68** (2006.01)   **B32B 5/18** (2006.01)
**B32B 27/34** (2006.01)   **C08G 69/26** (2006.01)

(86) International application number:
**PCT/JP2018/046462**

(87) International publication number:
**WO 2019/131304 (04.07.2019 Gazette 2019/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.12.2017 JP 2017251938**

(71) Applicant: **Kuraray Co., Ltd.
Kurashiki-shi, Okayama 710-0801 (JP)**

(72) Inventors:
• **YABUNO, Youhei
  Kurashiki-shi, Okayama 713-8550 (JP)**
• **KOMATSU, Kensaku
  Kurashiki-shi, Okayama 713-8550 (JP)**
• **SHIMAMURA, Shigetaka
  Tokyo 100-8115 (JP)**
• **HAMADA, Kenichi
  Tokyo 100-8115 (JP)**

(74) Representative: **Vossius & Partner
Patentanwälte Rechtsanwälte mbB
Siebertstrasse 3
81675 München (DE)**

(54) **COMPOSITE HOLLOW FIBER MEMBRANE, AND METHOD FOR PRODUCING COMPOSITE HOLLOW FIBER MEMBRANE**

(57)    One aspect of the present invention is a composite hollow fiber membrane including: a semipermeable membrane layer; and a supporting layer that has a hollow fiber shape and is porous, wherein the semipermeable membrane layer contains a crosslinked polyamide polymer composed of a polyfunctional amine compound and a polyfunctional acid halide compound, the supporting layer has a gradient structure in which pores of the supporting layer gradually increase in size from one of an inner surface and an outer surface to the other, has a cut-off particle size of 0.001 to 0.3 μm, and contains a crosslinked hydrophilic resin on at least a dense surface having smaller pores of the inner surface and the outer surface, and the semipermeable membrane layer is in contact with the dense surface of the supporting layer.

FIG. 2

## Description

### Technical Field

The present invention relates to a composite hollow fiber membrane and a method for producing the composite hollow fiber membrane.

### Background Art

Membrane separation technology in which a semipermeable membrane is used is drawing attention from viewpoints of energy saving, resource saving, environmental conservation, and the like. In the membrane separation technology in which a semipermeable membrane is used, a membrane including a semipermeable membrane layer having a semipermeable membrane function such as Nano Filtration (NF) membrane, Revers Osmosis (RO) membrane, and Forward Osmosis (FO) membrane is used. Examples of the membrane used in the membrane separation technology in which such a semipermeable membrane is used include a composite membrane including, in addition to the semipermeable membrane layer, a supporting layer that supports the semipermeable membrane layer.

Examples of the composite membrane include the membranes described in Patent Literature 1 and 2.

Patent Literature 1 describes a composite semipermeable membrane including a separation function layer containing a crosslinked polyamide obtained by interfacial polycondensation in the presence of a predetermined aliphatic carboxylic ester caused by contact between an aqueous solution of a polyfunctional amine and an organic solvent solution of a polyfunctional acid halide on a porous supporting membrane. Patent Literature 1 discloses that a composite semipermeable membrane having high water permeability that can be operated at a lower operating pressure is obtained.

Patent Literature 2 describes a forward osmosis membrane including a hydrophilic porous supporting layer and a first polyamide barrier layer, wherein the supporting layer and the barrier layer are incorporated in a thin membrane composite membrane and are placed adjacent to each other in the thin membrane composite membrane. Patent Literature 2 discloses that the performance of forward osmosis and osmotic pressure power generation can be improved.

### Citation List

### Patent Literature

Patent Literature 1: Japanese Patent Laid-open Publication No.2000-15067
Patent Literature 2: Japanese Translation of PCT International Application Publication No. 2013-545593

### Summary of Invention

It is an object of the present invention to provide a composite hollow fiber membrane that can suitably perform the separation by a semipermeable membrane layer and further has excellent durability, and a method for producing the composite hollow fiber membrane.

One aspect of the present invention is a composite hollow fiber membrane comprising: a semipermeable membrane layer; and a supporting layer that has a hollow fiber shape and is porous, wherein the semipermeable membrane layer contains a crosslinked polyamide polymer composed of a polyfunctional amine compound and a polyfunctional acid halide compound, the supporting layer has a gradient structure in which pores of the supporting layer gradually increase in size from one of an inner surface and an outer surface to the other, has a cut-off particle size of 0.001 to 0.3 $\mu$m, and contains a crosslinked hydrophilic resin on at least a dense surface having smaller pores of the inner surface and the outer surface, and the semipermeable membrane layer is in contact with the dense surface of the supporting layer.

The above-mentioned and other objects, characteristics, and advantages of the present invention will become apparent from the detailed description below.

### Brief Description of Drawings

FIG. 1 shows a partial perspective view showing a composite hollow fiber membrane according to one embodiment of the present invention.

FIG. 2 shows a schematic diagram showing one example of a layer structure of the composite hollow fiber membrane shown in FIG. 1.

FIG. 3 shows a schematic diagram showing another example of a layer structure of the composite hollow fiber membrane shown in FIG. 1.

FIG. 4 shows a scanning electron micrograph of a cross section of a supporting layer included in the composite hollow fiber membrane according to Example 1.

FIG. 5 shows a scanning electron micrograph of an outer surface of a supporting layer included in the composite hollow fiber membrane according to Example 1.

FIG. 6 shows a scanning electron micrograph of an inner surface of a supporting layer included in the composite hollow fiber membrane according to Example 1.

FIG. 7 shows a scanning electron micrograph of an outer surface of the composite hollow fiber membrane according to Example 1.

**Description of Embodiments**

In separation technology in which a composite membrane including a semipermeable membrane layer and a supporting layer is used, separation is performed using a semipermeable membrane layer through which a solvent such as water easily permeates, but a solute does not permeate. That is, when a composite membrane including a semipermeable membrane layer and a supporting layer is used for separation technology, the semipermeable membrane layer mainly contributes to the separation, Thus, the present inventors have paid attention to that the supporting layer is required not only to support the semipermeable membrane layer to increase the strength and durability of the composite membrane, but also not to impair the separation by the semipermeable membrane layer.

The case where such a composite membrane is used in, for example, FO method, that is, the case where such a composite membrane is used as an FO membrane will be described.

FO method is a separation method in which two solutions having different solute concentrations are contacted each other with a semipermeable membrane interposed between the two solutions, and water permeates the semipermeable membrane from a dilute solution having a low solute concentration to a concentrated solution having a high solute concentration by the osmotic pressure difference caused by the solute concentration difference as the driving force. According to the study of the present inventors, it is presumed that when a composite membrane including a semipermeable membrane layer and a supporting layer is used as the semipermeable membrane, the osmotic pressure difference as the driving force is not the osmotic pressure difference caused by the solute concentration difference between the solutions with a composite membrane interposed between the solutions, but the osmotic pressure difference caused by the solute concentration difference between the solutions with a semipermeable membrane layer interposed between the solutions. Thus, when the solution existing in the supporting layer has concentration bias of the solute, that is, internal concentration polarization due to, for example, low fluidity of the solution in the supporting layer, the osmotic pressure difference as the driving force is thought to be reduced. Thus, when internal concentration polarization occurs, the osmotic pressure difference as a driving force is thought to be reduced. Thus, the present inventors have paid attention to that the supporting layer of the composite membrane is required to have increased fluidity of solutions within the supporting layer and less occurrence of internal concentration polarization. The present inventors have paid attention to that the composite membrane including such a supporting layer is required to have strength and durability increased by the supporting layer, be capable of suitably performing the separation by the semipermeable membrane layer, and, for example, sufficiently exhibit desalination performance.

Thus, the present inventors have paid attention to that the composite membrane including a semipermeable membrane layer and a supporting layer is required to suppress the impairment of separation by the semipermeable membrane layer caused by the supporting layer, and suitably perform separation by the semipermeable membrane layer. Further, the present inventors have paid attention to that the composite membrane is required to have durability and the like of the composite membrane increased by the supporting layer, and maintain the suitable separation for a long time.

Examples of the composite membrane including a semipermeable membrane layer and a supporting layer include a composite membrane including a supporting layer of a flat membrane as described in Patent Literature 1. The present inventors have paid attention to, in order to suitably perform separation by a semipermeable membrane layer, using a membrane that has a hollow fiber shape and can have a larger membrane area per footprint than that of a flat membrane instead of a flat membrane as the supporting layer included in the composite membrane. Patent Literature 2 describes a hollow fiber membrane having a polyamide barrier layer on the surface of the supporting membrane formed by interfacial polymerization.

However, according to the study of the present inventors, when a membrane that has a hollow fiber shape is simply used as a supporting layer, a semipermeable membrane layer is not suitably formed on the supporting layer, and a composite hollow fiber membrane capable of suitably performing the separation by a semipermeable membrane layer may not be obtained. A composite hollow fiber membrane having sufficiently high durability may not be obtained. For example, peeling may occur at the interface between the semipermeable membrane layer and the supporting layer.

As a result of various studies, the present inventors have found that by the present invention described below, the separation by a semipermeable membrane layer can be suitably performed, and further, the above-mentioned object of providing a composite hollow fiber membrane having excellent durability and a method for producing the composite hollow fiber membrane is achieved.

Hereinafter, though embodiments according to the present invention will be described, the present invention is not limited thereto.

[Composite hollow fiber membrane]

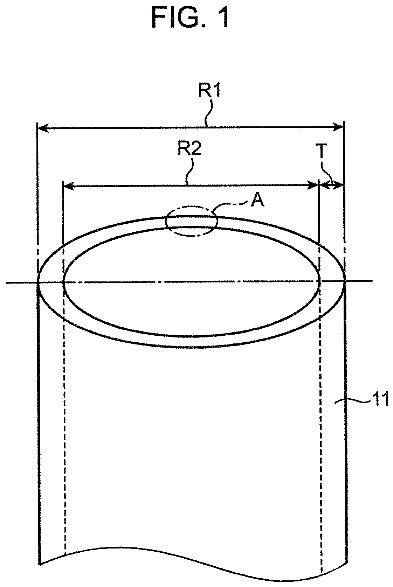

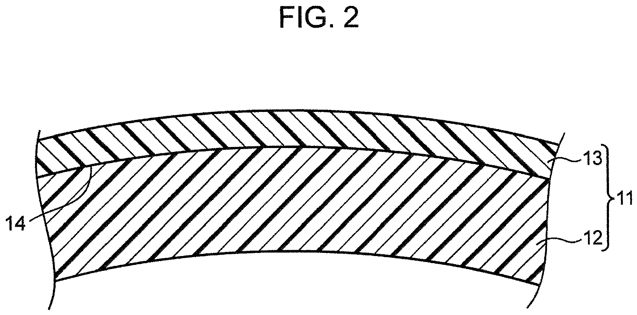

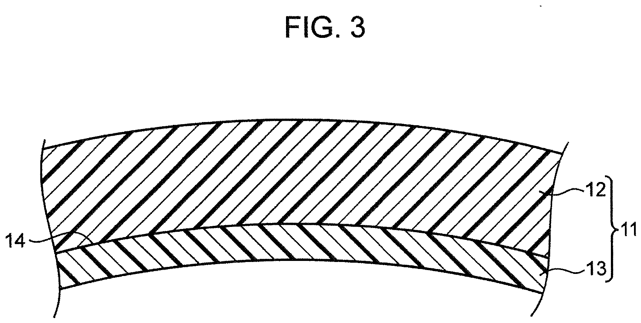

A composite hollow fiber membrane 11 according to an embodiment of the present invention is a membrane that has a hollow fiber shape as shown in FIG. 1. The composite hollow fiber membrane 11 includes a supporting layer 12 that has a hollow fiber shape and is porous and a semipermeable membrane layer 13 as shown in FIGS. 2 and 3. FIG. 1 shows a partial perspective view showing a composite hollow fiber membrane 11 according to an embodiment of the present invention. FIGS. 2 and 3 show enlarged views of part A of the composite hollow fiber membrane 11 shown in FIG. 1, which shows a layer structure of the composite hollow fiber membrane 11. FIGS. 2 and 3 are schematic diagrams showing the positional relation between the layers, and not particularly showing the thickness relation between the layers.

The semipermeable membrane layer 13 contains a crosslinked polyamide polymer composed of polyfunctional amine compound and a polyfunctional acid halide compound, i.e., a crosslinked polyamide obtained by polymerizing a polyfunctional amine compound and a polyfunctional acid halide compound.

The supporting layer 12 has a gradient structure in which pores of the supporting layer 12 gradually increase in size from one of an inner surface and an outer surface to the other. The gradient structure can be a gradient structure in which pores gradually increase in size from an inner surface to an outer surface, or a gradient structure in which pores gradually increase in size from an outer surface to an inner surface. The gradient structure in which the pores of the supporting layer 12 gradually increase in size from one of an inner surface and an outer surface to the other means a structure in which the pores present on one surface of an inner surface and an outer surface are smaller than the pores present on the other surface, and the pores inside the supporting layer 12 are equal to or greater than the pores present on the one surface and are equal to or less than the pores present on the other surface.

In the composite hollow fiber membrane 11, the semipermeable membrane layer 13 is placed in contact with a dense surface 14 having smaller pores of the supporting layer 12. That is, the semipermeable membrane layer 13 only needs to be in contact with the dense surface 14 of the supporting layer 12. When the outer surface is the dense surface 14, the semipermeable membrane layer 13 is placed on the outer surface of the supporting layer 12 as shown in FIG. 2. When the inner surface is the dense surface 14, the semipermeable membrane layer 13 is placed on the inner surface of the supporting layer 12 as shown in FIG. 3.

(Supporting layer)

As described above, the supporting layer 12 has a hollow fiber shape and is porous. The supporting layer 12 has a gradient structure in which pores of the supporting layer 12 gradually increase in size from one of an inner surface and an outer surface to the other.

The supporting layer 12 has a cut-off particle size of 0.001 to 0.3 $\mu$m, preferably 0.001 to 0.2 $\mu$m, and more preferably 0.001 to 0.1 $\mu$m. That is, the pores present on the dense surface are preferably pores that provide a cut-off particle size of the supporting layer within the above-mentioned range. When the cut-off particle size is too large, the pores present on the dense surface are large, and the semipermeable membrane layer tends not to be suitably formed on the dense surface. That is, the entire dense surface cannot be covered with the semipermeable membrane layer, and the separation by a semipermeable membrane layer tends not to be suitably performed. When the composite hollow fiber membrane is used, for example, as a forward osmosis (FO) membrane, sufficient desalination performance tends not to be obtained. Meanwhile, when the cut-off particle size is too small, separation by a semipermeable membrane layer can be suitably performed, and for example, desalination performance can be sufficiently exhibited. However, the permeation flux tends to decrease. Thus, when the cut-off particle size is within the above-mentioned range, both separation by a semipermeable membrane layer and permeability can be achieved. The cut-off particle size refers to the particle size of the smallest particles whose passing can be blocked by the supporting layer, and specific examples thereof include the particle size when the ratio of permeation blocking by the supporting layer (the blocking ratio of the supporting layer) is 90%.

The supporting layer 12 preferably has a pressure resistance of 0.3 MPa or more and less than 5 MPa, more preferably 0.3 MPa or more and less than 4 MPa, and further more preferably 0.3 MPa or more and less than 3 MPa.

The pressure resistance is the lower pressure of the maximum pressure at which the shape of the supporting layer is maintained when a pressure is applied from the outside of the supporting layer, and the maximum pressure at which the shape of the supporting layer is maintained when a pressure is applied from the inside of the supporting layer. The maximum pressure at which the shape of the supporting layer is maintained when a pressure is applied from the outside of the supporting layer is, for example, the pressure at which the supporting layer is crushed when a pressure is applied from the outside of the supporting layer. The maximum pressure at which the shape of the supporting layer is maintained when a pressure is applied from the inside of the supporting layer is, for example, the pressure at which the supporting layer is ruptured when a pressure is applied from the inside of the supporting layer. When the pressure resistance is too low, the durability of the composite hollow fiber membrane tends to be insufficient in practical operation in which the composite hollow fiber membrane is used. Though the pressure resistance is preferably as high as possible, a too high pressure resistance may be unnecessary in practical use.

The supporting layer 12 is hydrophilized by a hydrophilic resin being contained. The hydrophilic resin contained in the supporting layer 12 is crosslinked. Thus, the supporting layer 12 contains a crosslinked hydrophilic resin in a base material that has a hollow fiber shape and is porous. The supporting layer 12 only needs to contain a crosslinked hydrophilic resin at least on the dense surface 14, and can contain a crosslinked hydrophilic resin in parts other than the dense surface 14 of the supporting layer 12.

The base material that has a hollow fiber shape and is porous is not particularly limited as long as the base material is a base material composed of a material capable of forming a hollow fiber membrane. Examples of the component contained in the supporting layer 12 (the component that constitutes a base material that has a hollow fiber shape and is porous) include acrylic resin, polyacrylonitrile, polystyrene, polyamide, polyacetal, polycarbonate, polyphenylene ether, polyphenylene sulfide, polyethylene terephthalate, polytetrafluoroethylene, polyvinylidene fluoride, polyetherimide, polyamideimide, polychloroethylene, polyethylene, polypropylene, crystalline cellulose, polysulfone, polyphenylsulfone, polyethersulfone, acrylonitrile butadiene styrene (ABS) resin, and acrylonitrile styrene (AS) resin. Among them, polyvinylidene fluoride, polysulfone, and polyethersulfone are preferable, and polyvinylidene fluoride and polysulfone are more preferable. It is conceivable that these resins are more easily hydrophilized by a hydrophilic resin, and a supporting layer containing these resins is more easily formed into a suitable gradient structure. Thus, the composite hollow fiber membrane including a supporting layer containing these resins can more suitably perform separation by a semipermeable membrane layer, and a composite hollow fiber membrane having excellent durability can be provided. As the component contained in the supporting layer 12 (components that constitute the base material that has a hollow fiber shape and is porous), the above-mentioned resins can be used alone, or can be used in combination of two or more.

The hydrophilic resin is not particularly limited as long as the hydrophilic resin is a hydrophilic resin capable of hydrophilizing the supporting layer 12 by being contained in the base material that has a hollow fiber shape and is porous. Examples of the hydrophilic resin include cellulose acetate polymers such as cellulose, cellulose acetate, and cellulose triacetate, vinyl alcohol polymers such as polyvinyl alcohol and polyethylene vinyl alcohol, polyethylene glycol polymers such as polyethylene glycol and polyethylene oxide, acrylic acid polymers such as sodium polyacrylate, and polyvinyl pyrrolidone polymers such as polyvinyl pyrrolidone. Among them, vinyl alcohol polymers and polyvinyl pyrrolidone polymers are preferred, and polyvinyl alcohol and polyvinyl pyrrolidone are more preferred. It is conceivable that polyvinyl alcohol and polyvinyl pyrrolidone are more easily crosslinked, and the adhesiveness to the semipermeable membrane layer can be further increased. That is, it is conceivable that when at least one of polyvinyl alcohol and polyvinyl pyrrolidone is used as the hydrophilic resin to hydrophilize the supporting layer, these resins are easily crosslinked and easily hydrophilize the supporting layer appropriately. It is also conceivable that the adhesiveness to the semipermeable membrane layer containing the crosslinked polyamide polymer can be increased by including the crosslinked hydrophilic resin in the supporting layer. From these, it is conceivable that the semipermeable membrane layer can be suitably formed on the dense surface of the supporting layer, and peeling of the formed semipermeable membrane layer from the supporting layer can be sufficiently suppressed. Thus, the composite hollow fiber membrane including a supporting layer containing these resins as a hydrophilic resin can more suitably perform separation by a semipermeable membrane layer, and a composite hollow fiber membrane having excellent durability can be provided. As the hydrophilic resin, the resins exemplified above can be used alone, or can be used in combination of two or more. The hydrophilic resin can contain a hydrophilic single molecule such as glycerin and ethylene glycol, can be a polymer thereof, or can contain these as a copolymer component of the above-mentioned resins.

The crosslinking of the hydrophilic resin is not particularly limited as long as the hydrophilic resin is crosslinked and the solubility of the hydrophilic resin in water is reduced, and examples thereof include the crosslinking of insolubilizing the hydrophilic resin to prevent the hydrophilic resin from dissolving in water. Examples of the crosslinking of the hydrophilic resin when polyvinyl alcohol is used as the hydrophilic resin include acetalization reaction in which formaldehyde is used and an acetalization reaction in which glutaraldehyde is used. Examples of the crosslinking of the hydrophilic resin when polyvinyl pyrrolidone is used as the hydrophilic resin include the reaction with hydrogen peroxide solution. It is conceivable that, for the crosslinking of the hydrophilic resin, when the degree of crosslinking of the hydrophilic resin is high, elution of the hydrophilic resin from the composite hollow fiber membrane can be suppressed even if the composite hollow fiber membrane is used for a long time. Thus, it is conceivable that peeling and the like between the semipermeable membrane layer and the supporting layer can be suppressed for a long time.

In the supporting layer 12, the contact angle of water on the dense surface 14 is preferably 90° or less, more preferably 65° or less, and further preferably 10 to 65°. When the contact angle is too large, the hydrophilization of the supporting layer is insufficient, and the semipermeable membrane layer tends not to be suitably formed on the supporting layer. This is presumably because of the following. When the semipermeable membrane layer is formed, an aqueous solution of the polyfunctional amine compound, a raw material of the crosslinked polyamide polymer that constitutes the semipermeable membrane layer, is first contacted with the dense surface side of the supporting layer. At this time, when the contact angle of water on the dense surface 14 is 90° or less, the aqueous solution of the polyfunctional amine compound sufficiently permeates the dense surface side of the supporting layer. In this state, when an organic solvent of the polyfunctional acid halide compound, a raw material of the crosslinked polyamide polymer, is contacted with the dense surface side of the supporting layer, and then the supporting layer is dried, interfacial polymerization between the polyfunctional amine compound and the polyfunctional acid halide compound occurs, and a semipermeable membrane layer including the crosslinked polyamide polymer is formed in contact with the dense surface of the supporting layer. Meanwhile, when the contact angle of water on the dense surface 14 is too large, the aqueous solution of the polyfunctional amine compound does not sufficiently permeate the dense surface side of the supporting layer, and the interfacial polymerization tends not to be suitably performed. Thus, the semipermeable membrane layer tends not to be suitably formed on the supporting layer. When the contact angle of water on the dense surface 14 is too large, the semipermeable membrane layer tends to be easily peeled from the supporting layer even if the semipermeable membrane layer is formed.

As described above, the supporting layer 12 is preferably hydrophilized so that the contact angle of water on the dense surface 14 is 90° or less, and the supporting layer 12 is more preferably entirely hydrophilized. For example, when the composite hollow fiber membrane is used for water treatment in FO method, two aqueous solutions as a feed solution and a draw solution are efficiently contacted each other with the semipermeable membrane layer of the composite hollow fiber membrane used as an FO membrane interposed between the two aqueous solutions. Thus, when the supporting layer is entirely hydrophilized, the feed solution and the draw solution, which are aqueous solutions, efficiently diffuse in the supporting layer, thus, so-called internal concentration polarization is suppressed, and the separation by a semipermeable membrane layer can be more suitably performed. In addition, when the supporting layer is entirely hydrophilized, the supporting layer is more suitably hydrophilized. Thus, the semipermeable membrane layer is more suitably formed on the supporting layer, and a composite hollow fiber membrane having high durability in which peeling between the semipermeable membrane layer and the supporting layer is further suppressed is provided.

Whether the supporting layer is hydrophilized or not can be judged by subjecting the supporting layer to IR (Infrared Spectroscopy) analysis, XPS (X-ray Photoelectron Spectroscopy) analysis or the like. For example, by performing the above-mentioned analyses on the inner surface and the outer surface of the supporting layer, and the inside surface exposed by cutting out a piece of the supporting layer, the presence or absence of the hydrophilic resin at each position can be determined. When the hydrophilic resin is present in the entire supporting layer, the supporting layer is determined to be entirely hydrophilized. That is, when the presence of the hydrophilic resin is confirmed in all of the inner surface, the outer surface, and the inside of the supporting layer, the supporting layer is determined to be entirely hydrophilized.

Whether the supporting layer is entirely hydrophilized or not can also be determined from the water permeability. Specifically, when the permeation rate of pure water at a transmembrane pressure difference of 98 kPa and 25°C in a wet state is equivalent to the permeation rate of pure water at a transmembrane pressure difference of 98 kPa and 25°C in a dry state, the supporting layer is determined to be entirely hydrophilized. Specifically, the permeation rate of pure water at a transmembrane pressure difference of 98 kPa and 25°C in a wet state is preferably 0.9 to 2 times the permeation rate of pure water at a transmembrane pressure difference of 98 kPa and 25°C in a dry state.

Examples of the permeation rate of pure water at a transmembrane pressure difference of 98 kPa and 25°C in a dry state include a permeation rate measured by the following method. The supporting layer (the hollow fiber membrane), the object to be measured, is first dried. The drying is not particularly limited as long as the supporting layer can be dried, and examples thereof include drying of 24 hours or more by an air-blowing constant-temperature dryer at 60°C. External pressure filtration is performed with one end of the supporting layer in a dry state sealed, using pure water as raw water, using a single hollow fiber membrane module having an effective length of 20 cm, under conditions of a filtration pressure of 98 kPa and a temperature of 25°C to measure the water permeation amount per minute. The measured water permeation amount is converted to water permeation amount per unit membrane area, per unit time, and per unit pressure to obtain the permeation rate ($L/m^2/hour$: LMH) of pure water.

Examples of the permeation rate of pure water at a transmembrane pressure difference of 98 kPa and 25°C in a wet state include a permeation rate measured by the following method. The supporting layer (the hollow fiber membrane), the object to be measured, is first wetted. In the case of the supporting layer according to the present embodiment, the hydrophilic resin contained in the supporting layer is wetted. The wetting treatment is not particularly limited as long as the supporting layer is suitably wetted. Specifically, the supporting layer is subjected to wetting treatment as follows: the supporting layer is immersed in an aqueous solution of 50% by mass of ethanol for 20 minutes, and then washed with pure water for 20 minutes. The permeation rate (L/m$^2$/hour: LMH) of pure water at a transmembrane pressure difference of 98 kPa and 25°C is obtained in the same method as the measuring method of the permeation rate in a dry state except that the hollow fiber membrane in a wet state is used instead of the hollow fiber membrane in a dry state.

In the supporting layer 12. the average size of pores formed on the surface opposite to the dense surface 14 (opposite pore size) is preferably 1 to 50 $\mu$m, more preferably 1 to 30 $\mu$m, and preferably 1 to 20 $\mu$m. When the average size is too small, the degree of increase in size of the pores of the supporting layer from one of the inner surface and the outer surface to the other in the gradient structure of the supporting layer is too low, and the permeability tends to be insufficient. When the average size is too large, the strength of the supporting layer tends to be insufficient.

The method for producing the supporting layer 12 is not particularly limited as long as the hollow fiber membrane having the above-mentioned constitution can be produced. Examples of the method for producing the hollow fiber membrane include a method for producing a porous hollow fiber membrane. As a method for producing such a porous hollow fiber membrane, a method in which phase separation is used is known. Examples of the method for producing a hollow fiber membrane in which phase separation is used include Nonsolvent Induced Phase Separation (NIPS method) and Thermally Induced Phase Separation (TIPS method).

NIPS method is a method in which phase separation phenomenon is generated by contacting a uniform polymer stock solution obtained by dissolving a polymer in a solvent with a non-solvent in which the polymer cannot be dissolved to replace the solvent of the polymer stock solution with the non-solvent by the difference in concentration between the polymer stock solution and the non-solvent as the driving force. In NIPS method, the pore size of the pores formed generally changes depending on the solvent replacement rate. Specifically, there is a tendency that the lower the solvent replacement rate, the coarser the pores. In the production of a hollow fiber membrane, the solvent replacement rate is the highest on the contact surface with the non-solvent, and becomes lower toward the inside of the membrane. Thus, by NIPS method, a hollow fiber membrane having an asymmetric structure is obtained in which pores in the vicinity of the contact surface with the non-solvent are dense and pores gradually increase in size toward the inside of the membrane.

TIPS method is a method in which phase separation phenomenon is generated by dissolving at a high temperature a polymer in a poor solvent in which the polymer can be dissolved at a high temperature, but the polymer cannot be dissolved at lower temperature, and cooling the solution. The heat exchange rate is generally higher than the solvent replacement rate in NIPS method, and controlling the rate is difficult. Thus, in TIPS method, uniform pores tend to be formed in the membrane thickness direction,

The method for producing the hollow fiber membrane is not particularly limited as long as the hollow fiber membrane can be produced. Specific examples of the method for production include the method for production below. Examples of the method for production include a method including the steps of: preparing a membrane-forming stock solution containing a resin and a solvent that constitute the hollow fiber membrane (preparation step), extruding the membrane-forming stock solution to form a hollow fiber shape (extrusion step), and coagulating the extruded membrane-forming stock solution that has a hollow fiber shape to form a hollow fiber membrane (forming step).

(Semipermeable membrane layer)

The semipermeable membrane layer 13 is not particularly limited as long as the semipermeable membrane layer 13 is a layer that contains a crosslinked polyamide polymer composed of a polyfunctional amine compound and a polyfunctional acid halide compound, and has a semipermeable membrane function.

The polyfunctional amine compound is not particularly limited as long as the polyfunctional amine compound is a compound having two or more amino groups in the molecule. Examples of the polyfunctional amine compound include an aromatic polyfunctional amine compound, an aliphatic polyfunctional amine compound, and an alicyclic polyfunctional amine compound. Examples of the aromatic polyfunctional amine compound include phenylenediamines such as m-phenylenediamine, p-phenylenediamine, and o-phenylenediamine, triaminobenzenes such as 1,3,5-triaminobenzene and 1,3,4-triaminobenzene, diaminotoluenes such as 2,4-diaminotoluene and 2,6-diaminotoluene, 3,5-diaminobenzoic acid, xylylenediamine, and 2,4-diaminophenol dihydrochloride (amidol). Examples of the aliphatic polyfunctional amine compound include ethylenediamine, proprendiamine, and tris(2-aminoethyl)amine. Examples of the alicyclic polyfunctional amine compound include 1,3-diaminocyclohexane, 1,2-diaminocyclohexane, 1,4-diaminocyclohexane, piperazine, 2,5-dimethylpiperazine, and 4-aminomethylpiperazine. Among them, the aromatic polyfunctional amine compounds is preferred, and phenylenediamine is more preferred. As the polyfunctional amine compound, the compounds exemplified above can be used alone, or can be used in combination of two or more.

The polyfunctional acid halide compound (polyfunctional acid halide) is not particularly limited as long as the polyfunctional acid halide compound is a compound formed by removing two or more hydroxyl groups from the acid contained in a polyfunctional organic acid compound having two or more acids in the molecule such as carboxylic acid, and binding a halogen to the acid from which hydroxyl groups are removed. The polyfunctional acid halide compound can be divalent or higher, and is preferably trivalent or higher. Examples of the polyfunctional acid halide compound include a polyfunctional acid fluoride, a polyfunctional acid chloride, a polyfunctional acid bromide, and a polyfunctional acid iodide. Among them, the polyfunctional acid chloride (polyfunctional acid chloride compound) is most easily obtained and has high reactivity, and thus is preferably used. However, the polyfunctional acid halide compound is not limited thereto. The polyfunctional acid chloride will be exemplified below. Examples of the polyfunctional acid halide other than the polyfunctional acid chloride include those obtained by changing the chlorides exemplified below to other halides.

Examples of the polyfunctional acid chloride compound include an aromatic polyfunctional acid chloride compound, an aliphatic polyfunctional acid chloride compound, and an alicyclic polyfunctional chloride compound. Examples of the aromatic polyfunctional acid chloride compound include trimesic acid trichloride, terephthalic dichloride, isophthalic dichloride, biphenyl dicarboxylic dichloride, naphthalenedicarboxylic dichloride, benzene trisulfonic trichloride, and benzene disulfonic dichloride. Examples of the aliphatic polyfunctional acid chloride compound include propane dicarboxylic acid dichloride, butane dicarboxylic acid dichloride, pentane dicarboxylic acid dichloride, propane tricarboxylic acid trichloride, butane tricarboxylic acid trichloride, pentane tricarboxylic acid trichloride, glutaryl chloride, and adipoyl chloride. Examples of the alicyclic polyfunctional chloride compound include cyclopropanetricarboxylic acid trichloride, cyclobutanetetracarboxylic acid tetrachloride, cyclopentanetricarboxylic acid trichloride, cyclopentanetetracarboxylic acid tetrachloride, cyclohexanetricarboxylic acid trichloride, tetrahydrofuran tetracarboxylic acid tetrachloride, cyclopentane dicarboxylic acid dichloride, cyclobutane dicarboxylic acid dichloride, cyclohexanedicarboxylic acid dichloride, and tetrahydrofurandicarboxylic acid dichloride. Among them, the aromatic polyfunctional acid chloride compound is preferred, and the trimesic acid trichloride is more preferred. As the polyfunctional acid halide compound, the compounds exemplified above can be used alone, or can be used in combination of two or more.

(Composite hollow fiber membrane)

The composite hollow fiber membrane according to the present embodiment is not particularly limited as long as the supporting layer included is the above-mentioned supporting layer that supports the semipermeable membrane layer and further does not impair the separation by the semipermeable membrane layer. That is, the composite hollow fiber membrane according to the present embodiment includes a semipermeable membrane layer containing a crosslinked polyamide polymer composed of a polyfunctional amine compound and a polyfunctional acid halide compound; and a supporting layer, and the supporting layer can be a supporting layer that suitably achieves the function of the semipermeable membrane layer. The supporting layer can be a supporting layer that suitably achieves the function of a semipermeable membrane layer even if the semipermeable membrane layer is not the semipermeable membrane layer containing the crosslinked polyamide polymer described in Examples below.

The shape of the composite hollow fiber membrane is not particularly limited. The composite hollow fiber membrane has a hollow fiber shape, and one side of the composite hollow fiber membrane in the longitudinal direction is open and the other side can be open or closed. Examples of the shape of the open side of the composite hollow fiber membrane include the shape as shown in FIG. 1.

The outer diameter R1 of the composite hollow fiber membrane is preferably 0.1 to 2 mm, more preferably 0.2 to 1.5 mm, and further more preferably 0.3 to 1.5 mm. When the outer diameter is too small, the inner diameter of the composite hollow fiber membrane may also be too small. In this case, the liquid passing resistance at the hollow portion becomes large, and a sufficient flow rate tends not to be obtained. Thus, when the composite hollow fiber membrane is used as a forward osmosis membrane or the like, the draw solution tends not to flow at a sufficient flow rate. In addition, when the outer diameter is too small, the pressure resistance to the pressure applied from the outside tends to decrease. Further, when the outer diameter is too small, the membrane thickness of the composite hollow fiber membrane may be too small, and in this case, the strength of the composite hollow fiber membrane tends to be insufficient. That is, a suitable pressure resistance tends not to be achieved. In the case of too large outer diameter, when a hollow fiber membrane module in which a plurality of composite hollow fiber membranes are placed in a casing is produced, the number of hollow fiber membranes placed in the casing decreases, the membrane area of hollow fiber membranes decreases, and the hollow fiber membrane module tends not to have sufficient flow rate in practical use. When the outer diameter is too large, the pressure resistance to the pressure applied from the inside tends to decrease. Thus, when the outer diameter of the composite hollow fiber membrane is within the above-mentioned range, the composite hollow fiber membrane has sufficient strength and excellent permeability, and can suitably perform separation by a semipermeable membrane.

The inner diameter R2 of the composite hollow fiber membrane is preferably 0.05 to 1.5 mm, preferably 0.1 to 1 mm, and further preferably 0.2 to 1 mm. When the inner diameter is too small, the liquid passing resistance at the hollow portion becomes large, and a sufficient flow rate tends not to be obtained. Thus, when the composite hollow fiber membrane is used as a forward osmosis membrane or the like, the draw solution tends not to flow at a sufficient flow rate. When the inner diameter is too small, the outer diameter of the composite hollow fiber membrane may also be too small. In this case, the pressure resistance to the pressure applied to the outside tends to decrease. When the inner diameter is too large, the outer diameter of the composite hollow fiber membrane may be too large. In this case, when a hollow fiber membrane module in which a plurality of composite hollow fiber membranes is placed in a casing is produced, the number of hollow fiber membranes placed in the casing decreases, the membrane area of hollow fiber membranes decreases, and the hollow fiber membrane module tends not to have sufficient flow rate in practical use. When the inner diameter is too large, the outer diameter of the composite hollow fiber membrane may also be too large. In this case, the pressure resistance to the pressure applied from the inside tends to decrease. When the inner diameter is too large, the membrane thickness of the composite hollow fiber membrane may be too small, and in this case, the strength of the composite hollow fiber membrane tends to be insufficient. That is, a suitable pressure resistance tends not to be achieved. Thus, when the inner diameter of the composite hollow fiber membrane is within the above-mentioned range, the composite hollow fiber membrane has sufficient strength and excellent permeability, and can suitably perform separation by a semipermeable membrane.

The membrane thickness T of the composite hollow fiber membrane is preferably 0.02 to 0.3 mm, more preferably 0.05 to 0.3 mm, and further preferably 0.05 to 0.28 mm. When the membrane thickness is too small, the strength of the composite hollow fiber membrane tends to be insufficient. That is, a suitable pressure resistance tends not to be achieved. When the membrane thickness is too large, the permeability tends to decrease. When the membrane thickness is too large, internal concentration polarization in the supporting layer is likely to occur, and the separation by a semipermeable membrane tends to be impaired. That is, when the composite hollow fiber membrane is used as a forward osmosis membrane or the like, the contact resistance between the draw solution and the feed solution increases, and thus permeability tends to decrease. Thus, when the membrane thickness of the composite hollow fiber membrane is within the above-mentioned range, the composite hollow fiber membrane has sufficient strength and excellent permeability, and can also suitably perform separation by a semipermeable membrane.

The membrane thickness of the semipermeable membrane layer 13 is a thickness formed by the interfacial polymerization below. Specifically, the membrane thickness of the semipermeable membrane layer is 1 to 10,000 nm, more preferably 1 to 5,000 nm, and further preferably 1 to 3,000 nm. When the membrane thickness is too small, the separation by a semipermeable membrane layer tends not to be suitably performed. When the composite hollow fiber membrane is used as a forward osmosis membrane or the like, for example, sufficient desalination performance is not exhibited, for example, salt backflow rate increases, and the separation by a semipermeable membrane layer tends not to be suitably performed. This is presumably because, for example, the semipermeable membrane layer is too thin, and the function as the semipermeable membrane layer cannot be sufficiently achieved, or the semipermeable membrane layer is not capable of sufficiently covering the supporting layer. When the membrane thickness is too large, the permeability tends to decrease. This is presumably because the semipermeable membrane layer is too thick, the water permeation resistance increases, and water is unlikely to permeate.

The membrane thickness of the supporting layer 12 is a difference between the membrane thickness of the composite hollow fiber membrane and the membrane thickness of the semipermeable membrane layer 13, and specifically it is 0.02 to 0.3 mm, more preferably 0.05 to 0.3 mm, and further preferably 0.05 to 0.25 mm. The membrane thickness of the supporting layer is almost the same as the membrane thickness of the composite hollow fiber membrane because the semipermeable membrane layer is very thin compared to the supporting layer. When the membrane thickness is too small, the strength of the composite hollow fiber membrane tends to be insufficient. That is, a suitable pressure resistance tends not to be achieved. When the membrane thickness is too large, the permeability tends to decrease. When the membrane thickness is too large, internal concentration polarization in the supporting layer is likely to occur, and the separation by a semipermeable membrane tends to be impaired. That is, when the composite hollow fiber membrane is used as a forward osmosis membrane or the like, the contact resistance between the draw solution and the feed solution increases, and thus permeability tends to decrease. Thus, when the membrane thickness of the composite hollow fiber membrane is within the above-mentioned range, the composite hollow fiber membrane has sufficient strength and excellent permeability, and can also suitably perform separation by a semipermeable membrane.

The composite hollow fiber membrane can be applied to the membrane separation technology in which a semipermeable membrane is used. That is, the composite hollow fiber membrane can be used as, for example, an NF membrane, a RO membrane, and an FO membrane. Among them, the composite hollow fiber membrane is preferably an FO membrane used in FO method.

In general, a RO membrane achieves a semipermeable membrane function and can be also used as an FO membrane. However, when a conventional RO membrane is used as it is as an FO membrane, the separation by a semipermeable membrane may not be suitably performed due to the influence of internal concentration polarization. That is, it is known that the separation by an FO membrane is likely to be influenced by internal concentration polarization in FO method. As described above, the occurrence of internal concentration polarization is sufficiently suppressed in the composite hollow fiber membrane according to the present embodiment, and the composite hollow fiber membrane can be also suitably used as an FO membrane used in FO method.

[Method for producing composite hollow fiber membrane]

The method for producing the composite hollow fiber membrane according to the present embodiment is not particularly limited as long as the above-mentioned composite hollow fiber membrane can be produced. Examples of the method for production include the method for production as described below. The method for production include the steps of: contacting an aqueous solution of the polyfunctional amine compound with the dense surface side of the supporting layer (the first contacting step); further contacting an organic solvent solution of the polyfunctional acid halide compound with the dense surface side of the supporting layer that has been contacted with the aqueous solution of the polyfunctional amine compound (the second contacting step); and drying the supporting layer that has been contacted with the aqueous solution of the polyfunctional amine compound and the organic solvent solution of the polyfunctional acid halide compound (drying step).

In the first contacting step, an aqueous solution of the polyfunctional amine compound is contacted with the dense surface side of the supporting layer. Thereby, the aqueous solution of the polyfunctional amine compound permeates the supporting layer from the dense surface side.

The aqueous solution of the polyfunctional amine compound preferably has a concentration of the polyfunctional amine compound of 0.1 to 5% by mass, and more preferably has a concentration of the polyfunctional amine compound of 0.1 to 3% by mass. When the concentration of the polyfunctional amine compound is too low, a suitable semipermeable membrane layer tends not to be formed. For example, pinholes are formed in the formed semipermeable membrane layer. Thus, the separation by a semipermeable membrane layer tends to be insufficient. When the concentration of the polyfunctional amine compound is too high, the semipermeable membrane layer tends to be too thick. When the semipermeable membrane layer is too thick, the permeability of the obtained composite hollow fiber membrane tends to decrease.

The aqueous solution of the polyfunctional amine compound is a solution obtained by dissolving the polyfunctional amine compound in water, and additives such as a salt, a surfactant, and a polymer can be added as needed.

In the second contacting step, the dense surface side of the supporting layer that has been contacted with the aqueous solution of the polyfunctional amine compound is further contacted with an organic solvent solution of the polyfunctional acid halide compound. Thereby, an interface is formed between the aqueous solution of the polyfunctional amine compound that has permeated the dense surface side of the supporting layer and the organic solvent solution of the polyfunctional acid halide compound. Then, the reaction between the polyfunctional amine compound and the polyfunctional acid halide compound proceeds at the interface. That is, interfacial polymerization between the polyfunctional amine compound and the polyfunctional acid halide compound occurs. By this interfacial polymerization, a crosslinked polyamide is formed.

The organic solvent solution of the polyfunctional acid halide compound preferably has a concentration of the polyfunctional acid halide compound of 0.01 to 5% by mass, and more preferably has a concentration of the polyfunctional acid halide compound of 0.01 to 3% by mass. When the concentration of the polyfunctional acid halide compound is too low, a suitable semipermeable membrane layer tends not to be formed. For example, pinholes are formed in the formed semipermeable membrane layer. Thus, the separation by a semipermeable membrane layer, for example, the desalination performance tends to be insufficient. When the concentration of the polyfunctional acid halide compound is too high, the semipermeable membrane layer tends to be too thick. When the semipermeable membrane layer is too thick, the permeability of the obtained composite hollow fiber membrane tends to decrease.

The organic solvent solution of the polyfunctional acid halide compound is a solution obtained by dissolving the polyfunctional acid halide compound in an organic solvent. The organic solvent is not particularly limited as long as it is a solvent in which the polyfunctional acid halide compound is dissolved and which is not dissolved in water. Examples of the organic solvent include alkane saturated hydrocarbons such as cyclohexane, heptane, octane, and nonane. Additives such as a salt, a surfactant, and a polymer can be added to the organic solvent as needed.

In the drying step, the supporting layer that has been contacted with the aqueous solution of the polyfunctional amine compound and the organic solvent solution of the polyfunctional acid halide compound is dried. In the second contacting step, the crosslinked polyamide polymer obtained by interfacial polymerization caused by the contact between the aqueous solution of the polyfunctional amine compound and the organic solvent solution of the polyfunctional acid halide compound is formed to cover the dense surface of the supporting layer. By drying the supporting layer, the formed crosslinked polyamide polymer is dried, and a semipermeable membrane layer containing the crosslinked polyamide polymer is formed.

In the drying, the temperature and the like are not particularly limited as long as the formed crosslinked polyamide polymer is dried. The drying temperature is preferably, for example, 50 to 150°C, and preferably 80 to 130°C. When the drying temperature is too low, not only the drying tends to be insufficient, but also drying time becomes too long, and production efficiency tends to decrease. When the drying temperature is too high, the formed semipermeable membrane layer is thermally degraded, the separation by a semipermeable membrane tends not to be suitably performed. For example, desalination performance tends to decrease, and water permeability tends to decrease. The drying time is preferably, for example, 1 to 30 minutes, and more preferably 1 to 20 minutes. When the drying time is too short, the drying tends to be insufficient. When the drying time is too long, the production efficiency tends to decrease. The formed semipermeable membrane layer is thermally degraded, and also the separation by a semipermeable membrane tends not to be suitably performed. For example, desalination performance tends to decrease, and water permeability tends to decrease.

According to the method for production as described above, a composite hollow fiber membrane that can suitably perform the separation by a semipermeable membrane layer and further has excellent durability can be suitably produced.

As described above, the present specification discloses technologies having various aspects, of which the main technology is summarized below.

One aspect of the present invention is a composite hollow fiber membrane comprising: a semipermeable membrane layer; and a supporting layer that has a hollow fiber shape and is porous, wherein the semipermeable membrane layer contains a crosslinked polyamide polymer composed of a polyfunctional amine compound and a polyfunctional acid halide compound, the supporting layer has a gradient structure in which pores of the supporting layer gradually increase in size from one of an inner surface and an outer surface to the other, has a cut-off particle size of 0.001 to 0.3 μm, and contains a crosslinked hydrophilic resin on at least a dense surface having smaller pores of the inner surface and the outer surface, and the semipermeable membrane layer is in contact with the dense surface of the supporting layer.

According to such constitution, a composite hollow fiber membrane that can suitably perform the separation by a semipermeable membrane layer and further has excellent durability can be provided.

This is presumably because of the following.

By using a supporting layer that has a hollow fiber shape as the supporting layer, the membrane area can be widened compared to a supporting layer of a flat membrane. Though a supporting layer that has a hollow fiber shape is used as a supporting layer, by forming a semipermeable membrane layer on the supporting layer, a composite hollow fiber membrane including a suitable semipermeable membrane layer on a supporting layer can be obtained.

As the supporting layer that has a hollow fiber shape and is porous, a supporting layer having a dense surface on which small pores are formed so that the cut-off particle size of the supporting layer is 0.001 to 0.3 μm and having a gradient structure in which pores gradually increase in size from the dense surface to the other surface is used. The supporting layer contains a crosslinked hydrophilic resin on at least the dense surface. Thus, in the supporting layer, at least the dense surface is hydrophilized. The hydrophilized dense surface is contacted with the semipermeable membrane layer. As described above, the semipermeable membrane layer is formed on the hydrophilized dense surface, and thus, the semipermeable membrane layer is presumably suitably formed on the dense surface of the supporting layer. The supporting layer has a gradient structure in which pores gradually increase in size from one surface, the dense surface on which the semipermeable membrane layer is formed, to the other surface. Since the supporting layer has such a gradient structure, the decrease in the fluidity of the solution contained in the supporting layer can also be suppressed in the supporting layer. That is, in the composite hollow fiber membrane including such a supporting layer, the occurrence of the internal concentration polarization can be suppressed. Thus, as described above, it is conceivable that, in the composite hollow fiber membrane, the semipermeable membrane layer can be suitably formed on the dense surface of the supporting layer, in addition, the occurrence of the internal concentration polarization can be suppressed, and thus the separation by a semipermeable membrane layer can be suitably performed. It is conceivable that, in the composite hollow fiber membrane, the semipermeable membrane layer is suitably formed on the dense surface of the supporting layer, thus deterioration due to bending or the like can be sufficiently suppressed, and the durability can be sufficiently improved.

From the above, it is conceivable that a composite hollow fiber membrane that can suitably perform the separation by a semipermeable membrane layer and further has excellent durability can be obtained.

When the composite hollow fiber membrane is used, for example, in forward osmosis method, the composite hollow fiber membrane can exhibit excellent desalination performance. The composite hollow fiber membrane can exhibit the suitable separation by a semipermeable membrane layer even if, for example, the composite hollow fiber membrane is bent.

In the composite hollow fiber membrane, a contact angle of water on the dense surface is preferably 90° or less.

According to such constitution, a composite hollow fiber membrane that can more suitably perform the separation by a semipermeable membrane layer and has excellent durability can be provided. This is presumably because the dense surface is sufficiently hydrophilized. That is, this is presumably because the supporting layer is hydrophilized so that the contact angle of water on the dense surface is 90° or less by including the crosslinked hydrophilic resin.

In the composite hollow fiber membrane, the supporting layer preferably has a pressure resistance of 0.3 MPa or more and less than 5 MPa.

According to such a configuration, a composite hollow fiber membrane having excellent durability can be obtained.

In the composite hollow fiber membrane, the hydrophilic resin is preferably at least one of polyvinyl alcohol and polyvinyl pyrrolidone.

According to such constitution, a composite hollow fiber membrane that can more suitably perform the separation by a semipermeable membrane layer and has excellent durability can be provided.

This is presumably because polyvinyl alcohol and polyvinyl pyrrolidone can be easily crosslinked and can enhance the adhesiveness to the semipermeable membrane layer. That is, it is conceivable that when at least one of polyvinyl alcohol and polyvinyl pyrrolidone is used as the hydrophilic resin to hydrophilize the supporting layer, these resins are easily crosslinked and can appropriately hydrophilize the supporting layer. It is also conceivable that the adhesiveness to the semipermeable membrane layer containing the crosslinked polyamide polymer can be increased by including the crosslinked hydrophilic resin in the supporting layer. From these, it is conceivable that the semipermeable membrane layer can be suitably formed on the dense surface of the supporting layer, and peeling of the formed semipermeable membrane layer from the supporting layer can be sufficiently suppressed. Thus, it is conceivable that the composite hollow fiber membrane can more suitably perform the separation by a semipermeable membrane layer, and is excellent in durability.

In the composite hollow fiber membrane, the supporting layer preferably contains at least one of polyvinylidene fluoride and polysulfone, and more preferably contains polyvinylidene fluoride.

According to such constitution, a composite hollow fiber membrane that can more suitably perform the separation by a semipermeable membrane layer and has excellent durability can be provided.

This is presumably because the supporting layer containing such a resin is easily hydrophilized by a hydrophilic resin, and further is easily formed to have a suitable gradient structure.

In the composite hollow fiber membrane, the supporting layer is preferably entirely hydrophilized.

According to such constitution, a composite hollow fiber membrane that can more suitably perform the separation by a semipermeable membrane layer and has excellent durability can be provided. This is presumably because the semipermeable membrane layer can be more suitably formed on the supporting layer.

The composite hollow fiber membrane is preferably a forward osmosis membrane used in forward osmosis method.

It is known that, in forward osmosis method, the separation by a forward osmosis membrane is likely to be influenced by internal concentration polarization. In the composite hollow fiber membrane, the occurrence of internal concentration polarization can be sufficiently suppressed, and thus the composite hollow fiber membrane can be suitably used as a forward osmosis membrane used in forward osmosis method.

Another aspect of the present invention is a method for producing the composite hollow fiber membrane, the method including the steps of: contacting an aqueous solution of the polyfunctional amine compound with the dense surface side of the supporting layer; further contacting an organic solvent solution of the polyfunctional acid halide compound with the dense surface side of the supporting layer that has been contacted with the aqueous solution of the polyfunctional amine compound; and drying the supporting layer that has been contacted with the aqueous solution of the polyfunctional amine compound and the organic solvent solution of the polyfunctional acid halide compound.

According to such constitution, a composite hollow fiber membrane that can suitably perform the separation by a semipermeable membrane layer and further has excellent durability can be suitably produced.

The present invention has been made in view of such circumstances, and can provide a composite hollow fiber membrane that can suitably perform the separation by a semipermeable membrane layer and further has excellent durability, and a method for producing the composite hollow fiber membrane.

Hereinafter, though the present invention will be described further specifically with reference to Examples, the scope of the present invention is not limited thereto.

Examples

[Example 1]

(Production of supporting layer)

As the supporting layer of the composite hollow fiber membrane, a hollow fiber membrane obtained by the following method was used.

A mixture of polyvinylidene fluoride (PVDF: Kynar741 manufactured by Arkema S.A.) as a resin that constitutes the hollow fiber membrane (the supporting layer), γ-butyrolactone (GBL: GBL manufactured by Mitsubishi Chemical Corporation) as a solvent, polyvinyl pyrrolidone (PVP: Sokalan K-90P manufactured by BASF Japan K.K.) as a hydrophilic resin, and polyethylene glycol (PEG-600 manufactured by Sanyo Chemical Industries, Ltd.) as an additive was first prepared at a mass ratio of 30 : 56 : 7 : 7. The mixture was dissolved in a dissolution tank at a constant temperature of 90°C to obtain a membrane-forming stock solution.

The obtained membrane-forming stock solution at 90°C was extruded into a hollow shape. At this time, a mixture obtained by mixing γ-butyrolactone (GBL: GBL manufactured by Mitsubishi Chemical Corporation) and glycerin (purified glycerin manufactured by Kao Corporation) at a mass ratio of 15 : 85 at a constant temperature of 65°C was discharged simultaneously with the membrane-forming stock solution as an inside coagulating liquid.

The membrane-forming stock solution extruded together with the inside coagulating liquid was immersed in water at 80°C as an outside coagulating liquid after a free running distance of 5 cm. Thereby, the membrane-forming stock solution was solidified, and a hollow fiber membrane was obtained.

Then, the obtained hollow fiber membrane was washed in water. Thereby, the solvent and the excess hydrophilic resin were extracted and removed from the hollow fiber membrane.

Then, the hollow fiber membrane was immersed in an aqueous solution containing 3% by mass of hydrogen peroxide. Thereby, the hydrophilic resin contained in the hollow fiber membrane was crosslinked. Then, the hollow fiber membrane was immersed in water. Thereby, the hydrophilic resin that is insufficiently crosslinked was removed from the hollow fiber membrane. This indicates that the hydrophilic resin present in the hollow fiber membrane is a hydrophilic resin insolubilized by crosslinking. The hollow fiber membrane thus obtained was used as a supporting layer of the composite hollow fiber membrane as described above.

(Membrane structure, opposite pore size)

The supporting layer had a gradient structure in which inside pores gradually increase in size from the dense surface, which is the outer surface, to the inner surface. The presence of the gradient structure was also confirmed by the observation with a scanning electron microscope.

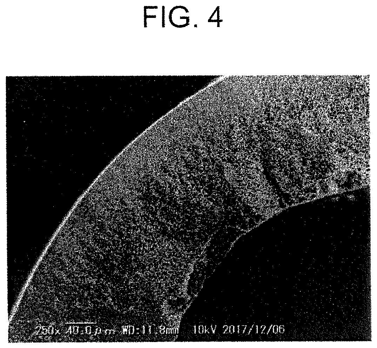

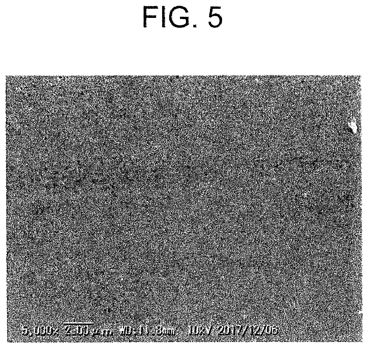

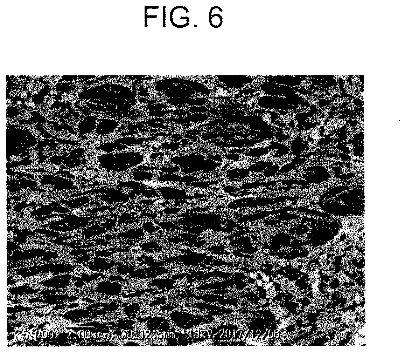

Specifically, the membrane structure (the cross section, the inner surface, and the outer surface) of the supporting layer was observed using a scanning electron microscope (S-3000N manufactured by Hitachi, Ltd.). The results are shown in FIGS. 4 to 6. FIG. 4 is a scanning electron micrograph of a cross section of a supporting layer included in the composite hollow fiber membrane according to Example 1. FIG. 5 is a scanning electron micrograph of an outer surface of a supporting layer included in the composite hollow fiber membrane according to Example 1. FIG. 6 is a scanning electron micrograph of an inner surface of a supporting layer included in the composite hollow fiber membrane according to Example 1. These obtained images confirmed that the supporting layer is a hollow fiber membrane having a gradient structure in which pores present on the outer surface are smaller than pores present on the inner surface.

The diameter of the pores present on the opposite surface of the dense surface (the inner surface in Example 1) (opposite pore size) was confirmed to be 10 μm from the average of the diameter of all pores found by observing the inner surface of the hollow fiber membrane in the obtained scanning electron micrograph.

(Cut-off particle size)

Then, the cut-off particle size of the obtained hollow fiber membrane (the supporting layer) was measured by the following method.

The blocking ratios of at least two types of particles having different particle sizes (Cataloid SI-550, Cataloid SI-45P, and Cataloid SI-80P manufactured by JGC Catalysts and Chemicals Ltd., and polystyrene latex having a particle size of 0.1 μm, 0.2 μm, 0.5 μm manufactured by Dow Chemical Company and the like) were measured, and the value of S when R is 90 was determined in the following approximation based on the measured value and taken as the cut-off particle size.

$$R = 100/(1 - m \times \exp(-a \times \log(S)))$$

In the above formula, a and m are constants determined by the hollow fiber membrane, and are calculated based on the measured values of two or more types of the blocking ratio.

When the cut-off particle size is less than 0.01 μm, the Stokes diameter based on the molecular weight (the molecular cut-off) of the material to be filtered when the blocking ratio of the hollow fiber membrane is 90% measured by the following measuring method, instead of the above-mentioned measuring method, was taken as the cut-off particle size.

In the measuring method, the value of S when R is 90 was determined in the same method using at least two types of dextran having different molecular weights (for example, Dextran-40, Dextran-70 and the like manufactured by Tokyo Chemical Industry Co., Ltd.) instead of at least two types of particles having different particle sizes, and taken as the molecular cut-off. The Stokes diameter was calculated from the determined molecular cut-off using the following Stokes equation, and taken as the cut-off particle size.

The Stokes equation is the following equation.

$$Rs = 2KT/(6\pi\eta D)$$

In the equation, Rs represents the Stokes diameter. K represents Boltzmann coefficient of $1.381 \times 10^{-23}$. K represents the absolute temperature of 298°C, and $\eta$ represents the viscosity of the solvent of 0.00089 Pa·s. D is $8.76 \times 10^{-9} \times S^{-0.48}$, which is proposed as a correlation equation between the molecular weight and the diffusion coefficient of a chain polymer. That is, $D = 8.76 \times 10^{-9} \times S^{-0.48}$.

The cut-off particle size obtained by the above-mentioned measuring method was 0.02 $\mu$m.

(Contact angle of water)

The contact angle of water on the dense surface was measured as follows.

The dense surface of the supporting layer was exposed. The supporting layer used in Example 1 is exposed as it is because the outer surface is the dense surface. When the inner surface is the dense surface, the supporting layer is cut along the longitudinal direction to expose the inner surface.

Then, a water droplet was dropped on the dense surface of the supporting layer, and the image at that moment was taken. Then, the angle between the surface of the water droplet and the dense surface at the place where the surface of the water droplet is in contact with the dense surface was measured. This angle is the contact angle of water. As the measuring device, Drop Master 700 manufactured by Kyowa Interface Science Co., Ltd was used.

The contact angle of water on the dense surface obtained by the above-mentioned measuring method was 45°.

(Pressure resistance)

The pressure resistance was measured as follows.

A hollow fiber membrane module in which one end of a hollow fiber membrane, a supporting layer, is sealed and the other end is open was first produced. The hollow fiber membrane module was pressurized so that the pressure applied to the outside of the supporting layer would be gradually increased, and the pressure when the supporting layer was crushed was measured. Further, the hollow fiber membrane module was pressurized so that the pressure applied to the inside of the supporting layer would be gradually increased, and the pressure when the supporting layer was ruptured was measured. The lower pressure of the two measured pressures was taken as the pressure resistance.

The pressure resistance obtained by the above-mentioned measuring method was 0.5 MPa.

(Hydrophilizing treatment)

Whether the hollow fiber membrane, the supporting layer, is entirely hydrophilized or not was judged from the hydrophilicity.

The permeation rate of pure water at a transmembrane pressure difference of 98 kPa and 25°C in a dry state of the supporting layer (the hollow fiber membrane), the object to be measured, was measured. Specifically, the supporting layer (the hollow fiber membrane), the object to be measured, was first dried for 24 hours or more by an air-blowing constant-temperature dryer at 60°C. External pressure filtration was performed with one end of the dried supporting layer sealed, using pure water as raw water, using a single hollow fiber membrane module having an effective length of 20 cm, under conditions of a filtration pressure of 98 kPa and a temperature of 25°C to measure the water permeation amount per minute. The measured water permeation amount was converted to water permeation amount per unit membrane area, per unit time, and per unit pressure to obtain the permeation rate (L/m$^2$/hour: LMH) of pure water. The permeation rate was taken as the permeation rate of pure water at a transmembrane pressure difference of 98 kPa and 25°C in a dry state.

In addition to the permeation rate in a dry state, the permeation rate of pure water at a transmembrane pressure difference of 98 kPa and 25°C in a wet state of the supporting layer (the hollow fiber membrane), the object to be measured, was measured. Specifically, the supporting layer (the hollow fiber membrane), the object to be measured, was immersed in an aqueous solution of 50% by mass of ethanol for 20 minutes, and then washed with pure water for 20 minutes for wetting treatment. The permeation rate (L/m$^2$/hour: LMH) of pure water at a transmembrane pressure difference of 98 kPa and 25°C was obtained in the same method as the measuring method of the permeation rate in a dry state except that the hollow fiber membrane in a wet state was used instead of the hollow fiber membrane in a dry state. The permeation rate was taken as the permeation rate of pure water at a transmembrane pressure difference of 98 kPa and 25°C in a wet state.

Then, the ratio of the permeation rate of pure water at a transmembrane pressure difference of 98 kPa and 25°C in a wet state to the permeation rate of pure water at a transmembrane pressure difference of 98 kPa and 25°C in a dry state was calculated.

The ratio was 1.0. This proved that the permeation rate in a dry state and the permeation rate in a wet state were almost equal. This confirmed that the supporting layer is entirely hydrophilized.

IR analysis was performed on the inner surface and the outer surface of the supporting layer, and the inside surface exposed by cutting out a piece of the supporting layer. This analysis confirmed that the hydrophilic resin is present on all of the inner surface, the outer surface, and the inside of the supporting layer. Thus, this also confirmed that the supporting layer is entirely hydrophilized.

(Preparation of semipermeable membrane layer)

A semipermeable membrane layer was formed on the dense surface (the outer surface in Example 1) side of the supporting layer.

Specifically, the supporting layer was immersed in an aqueous solution of 50% by mass of ethanol for 20 minutes, and then washed with pure water for 20 minutes for wetting treatment. The supporting layer in a wet state subjected to the wetting treatment was fixed onto a frame so that the supporting layer would not come into contact with other supporting layers. Then, the supporting layer was immersed in an aqueous solution of 2% by mass of m-phenylenediamine for two minutes so that the aqueous solution of 2% by mass of m-phenylenediamine, an aromatic polyfunctional amine compound, would come into contact with the dense surface side of the supporting layer. Thereby, the aqueous solution of 2% by mass of m-phenylenediamine permeated from the dense surface side of the supporting layer. Then, the excess aqueous solution of 2% by mass of m-phenylenediamine that did not permeate into the supporting layer was removed.

Then, the supporting layer was immersed in a hexane solution of 0.2% by mass of trimesic acid trichloride for one minute so that the hexane solution of 0.2% by mass of trimesic acid trichloride, an aromatic acid halide compound, would come into contact with the dense surface side of the supporting layer. Thereby, an interface is formed between the aqueous solution of m-phenylenediamine that permeated into the dense surface side of the supporting layer and the hexane solution of trimesic acid trichloride. Then, the interfacial polymerization between m-phenylenediamine and trimesic acid trichloride proceeds, and a crosslinked polyamide polymer is formed at the interface.

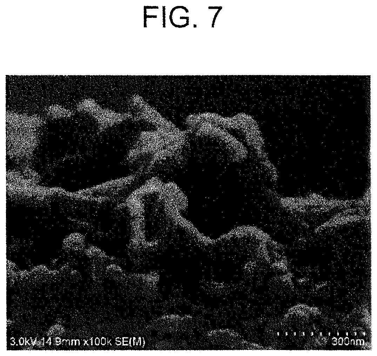

Then, the supporting layer on which the crosslinked polyamide polymer is formed was dried with a dryer at 90°C. Thereby, a semipermeable membrane layer was formed on the dense surface side of the supporting layer so that the semipermeable membrane layer would come into contact with the dense surface. The formation of the semipermeable membrane layer was also confirmed by the observation with a scanning electron microscope. Specifically, the outer surface of the composite hollow fiber membrane in which the semipermeable membrane layer is formed on the supporting layer was observed using a scanning electron microscope (S-3000N manufactured by Hitachi, Ltd.). The results are shown in FIG. 7. FIG. 7 shows a scanning electron micrograph of an outer surface of the composite hollow fiber membrane according to Example 1. The obtained image proved that a semipermeable membrane layer is suitably formed on the outer surface side of the composite hollow fiber membrane. The formed semipermeable membrane layer had a thickness of 200 nm. The supporting layer had a thickness of 0.2 mm.

(Composite hollow fiber membrane)

By the above-mentioned method for production, a composite hollow fiber membrane including a supporting layer and a semipermeable membrane layer was obtained. The composite hollow fiber membrane had an outer diameter of 1.0 mm, an inner diameter of 0.6 mm, and a membrane thickness of 0.2 mm. The membrane thickness of the composite hollow fiber membrane and the membrane thickness of the supporting layer were almost the same. This is because the semipermeable membrane layer is very thin compared to the supporting layer, and the thickness falls within an error range.

[Evaluation]

The composite hollow fiber membrane obtained as described above was evaluated by the following method.

(Performance evaluation in reverse osmosis RO mode)

The obtained composite hollow fiber membrane was used in reverse osmosis (RO) method, and the water permeability and the desalination ratio were measured.

Specifically, 500 mg/L aqueous NaCl solution as simulated seawater was filtered through the obtained composite hollow fiber membrane with a pressure of 0.3 MPa applied. The water permeation amount and the NaCl content of the obtained water at that time were measured. The measured water permeation amount was converted to water permeation amount per unit membrane area, per unit time, and per unit pressure to obtain the permeation rate (L/m$^2$/hour: LMH) of pure water. The permeation rate was evaluated as water permeability. The desalination ratio (%) was calculated from the NaCl content of the obtained water.

(Performance evaluation in forward osmosis FO mode)

The obtained composite hollow fiber membrane was used in forward osmosis (FO) method, and the water permeability and the salt backflow rate were measured.

Specifically, a 0.5 M aqueous NaCl solution as a simulated draw solution (simulated DS) and ion exchanged water as a simulated feed solution (simulated FS) were placed with the obtained composite hollow fiber membrane interposed between the two solutions, and filtration was performed. At that time, the simulated FS flowed on the semipermeable membrane layer side of the composite hollow fiber membrane, and the simulated DS flowed on the supporting layer side of the composite hollow fiber membrane. The water permeation amount from the simulated FS to the simulated DS was calculated from the weight changes of the simulated FS and the simulated DS. Then, the calculated water permeation amount was converted to water permeation amount per unit membrane area, per unit time, and per unit pressure to obtain the permeation rate (L/m$^2$/hour: LMH) of pure water. The permeation rate was evaluated as water permeability. The change in the salt concentration of the simulated FS was measured. From the change in salt concentration, a salt backflow rate (g/m$^2$/hour: gMH) was obtained.

(Durability: RO mode after being bent 10 times)

After bending the obtained composite hollow fiber membrane 10 times, the desalination ratio was determined by the same method as in the performance evaluation in reverse osmosis RO mode. The durability of the composite hollow fiber membrane is determined from the degree of decrease in the desalination ratio compared to the desalination ratio in the reverse osmosis RO mode described above.

In addition to the above-mentioned evaluations, the following evaluation was performed. The obtained composite hollow fiber membrane was first permeated by ion exchanged water for four weeks. After bending the composite hollow fiber membrane that was permeated by ion exchanged water 10 times, the desalination ratio was determined by the same method as in the performance evaluation in reverse osmosis RO mode. The degree of elution of the hydrophilic resin from the composite hollow fiber membrane is determined from the degree of decrease in the desalination ratio compared to the desalination ratio in the reverse osmosis RO mode described above.

These evaluation results are shown in Table 1 together with the production conditions and the like of the composite hollow fiber membrane.

[Example 2]

A composite hollow fiber membrane was produced in the same manner as in Example 1, except that the inside coagulating liquid and the outside coagulating liquid were exchanged. Specifically, a composite hollow fiber membrane was produced in the same manner as in Example 1, except that water was used as the inside coagulating liquid, and a mixed solution of γ-butyrolactone (GBL: GBL manufactured by Mitsubishi Chemical Corporation) and glycerin (purified glycerin manufactured by Kao Corporation) was used as the outside coagulating liquid. By the exchange of the inside coagulating liquid and the outside coagulating liquid, in the composite hollow fiber membrane, the inner surface of the supporting layer became the dense surface, and a semipermeable membrane layer was formed on the inner surface. Other properties of the supporting layer, the evaluation results of the composite hollow fiber membrane and the like are shown in Table 1.

[Example 3]

A composite hollow fiber membrane was produced in the same manner as in Example 1, except that the temperature of the membrane-forming solution when the membrane-forming solution is extruded into a hollow fiber shape was changed from 90°C to 120°C, and the temperature of the outside coagulating liquid was changed from 80°C to 90°C. Other properties of the supporting layer, the evaluation results of the composite hollow fiber membrane and the like are shown in Table 1.

[Example 4]

A composite hollow fiber membrane was produced in the same manner as in Example 1, except that polyvinyl alcohol (PVA: PVA-505 manufactured by KURARAY CO., LTD.) was used as a hydrophilic resin instead of polyvinyl pyrrolidone (PVP), and an aqueous solution containing 1% by mass of formaldehyde and 3% by mass of sulfuric acid instead of hydrogen peroxide solution was used to crosslink the hydrophilic resin. Other properties of the supporting layer, the evaluation results of the composite hollow fiber membrane and the like are shown in Table 1.

[Example 5]

A composite hollow fiber membrane was produced in the same manner as in Example 1, except that the following supporting layer was used as the supporting layer. Other properties of the supporting layer, the evaluation results of the composite hollow fiber membrane and the like are shown in Table 1.

(Production of supporting layer)

As the supporting layer of the composite hollow fiber membrane, a hollow fiber membrane obtained by the following method was used.

A mixture of polysulfone (PSF: Ultrason S3010 manufactured by BASF Japan K.K.) as a resin that constitutes the hollow fiber membrane (the supporting layer), dimethylformamide (DMF: DMF manufactured by MITSUBISHI GAS CHEMICAL COMPANY, INC.) as a solvent, polyethylene glycol (PEG-600 manufactured by Sanyo Chemical Industries, Ltd.) as an additive, and polyvinyl pyrrolidone (PVP: Sokalan K-90P manufactured by BASF Japan K.K.) as a hydrophilic resin was prepared at a mass ratio of 20 : 48 : 30 : 2. The mixture was dissolved in a dissolution tank at a constant temperature of 25°C to obtain a membrane-forming stock solution.

The obtained membrane-forming stock solution at 25°C was extruded into a hollow shape. At this time, water at 25°C was discharged simultaneously with the membrane-forming stock solution as an inside coagulating liquid.

The membrane-forming stock solution extruded together with the inside coagulating liquid was immersed in water at 60°C as an outside coagulating liquid after a free running distance of 5 cm. Thereby, the membrane-forming stock solution was solidified, and a hollow fiber membrane was obtained.

Then, the hollow fiber membrane was immersed in an aqueous solution containing 3% by mass of hydrogen peroxide. Thereby, the hydrophilic resin contained in the hollow fiber membrane was crosslinked. Then, the hollow fiber membrane was immersed in water. Thereby, the hydrophilic resin that is insufficiently crosslinked was removed from the hollow fiber membrane. This confirmed that the hydrophilic resin present in the hollow fiber membrane is a hydrophilic resin insolubilized by crosslinking.

The supporting layer had a gradient structure in which inside pores gradually increase in size from the dense surface, which is the inner surface, to the outer surface. The presence of the gradient structure was also confirmed by the observation with a scanning electron microscope.

Specifically, the membrane structure (the cross section, the inner surface, and the outer surface) of the supporting layer was observed using a scanning electron microscope (S-3000N manufactured by Hitachi, Ltd.). Obtained images confirmed that the supporting layer is a hollow fiber membrane having a gradient structure in which pores present on the inner surface are smaller than pores present on the outer surface.

[Comparative Example 1]

A composite hollow fiber membrane was produced in the same manner as in Example 1, except that the crosslinking treatment to crosslink the hydrophilic resin was not performed. Other properties of the supporting layer, the evaluation results of the composite hollow fiber membrane and the like are shown in Table 1.

[Comparative Example 2]

A composite hollow fiber membrane was produced in the same manner as in Example 1, except that a hollow fiber membrane (LP membrane manufactured by KURARAY CO., LTD.) was used as the supporting layer. The LP membrane has a gradient structure in which the outer surface is the dense surface, a cut-off particle size of 2.0 μm, and an opposite pore size of 10 μm. The LP membrane contains crosslinked polyvinyl alcohol (PVA: PVA-505 manufactured by KURARAY CO., LTD.). Other properties of the supporting layer, the evaluation results of the composite hollow fiber membrane and the like are shown in Table 1.

[Comparative Example 3]

A composite hollow fiber membrane was produced in the same manner as in Example 1, except that the crosslinking treatment to crosslink the hydrophilic resin was not performed, and the supporting layer was immersed in water until the elution of the hydrophilic resin from the obtained supporting layer stopped. Other properties of the supporting layer, the evaluation results of the composite hollow fiber membrane and the like are shown in Table 1.

[Comparative Example 4]

A composite hollow fiber membrane was produced in the same manner as in Example 1, except that the surface on which the semipermeable membrane layer is formed was changed from the outer surface (the dense surface) of the supporting layer to the inner surface (the surface opposite to the dense surface) of the supporting layer. That is, a composite hollow fiber membrane was produced in the same manner as in Example 1, except that the interfacial polymerization occurred on the inner surface of the supporting layer.

In the obtained composite hollow fiber membrane, the semipermeable membrane layer was not suitably formed. The obtained composite hollow fiber membrane was used in forward osmosis (FO) method, and the water permeability and the salt backflow rate were measured as described above. As a result, the permeation rate (the water permeability) of pure water was more than 100 L/m²/hour (LMH), and the desalination ratio was 0%. From this, it is conceivable that the surface opposite to the dense surface (the inner surface of the supporting layer) has too large pores, and thus the semipermeable membrane layer was not suitably formed. That is, it was confirmed that the semipermeable membrane layer is not suitably formed on the surface opposite to the dense surface.

[Table 1]

| | | EXAMPLE 1 | EXAMPLE 2 | EXAMPLE 3 | EXAMPLE 4 | EXAMPLE 5 | COMPARATIVE EXAMPLE 1 | COMPARATIVE EXAMPLE 2 | COMPARATIVE EXAMPLE 3 | COMPARATIVE EXAMPLE 4 |
|---|---|---|---|---|---|---|---|---|---|---|
| SUPPORTING LAYER | DENSE SURFACE | OUTER SURFACE | INNER SURFACE | OUTER SURFACE | OUTER SURFACE | INNER SURFACE | OUTER SURFACE | OUTER SURFACE | OUTER SURFACE | OUTER SURFACE |
| | CUT-OFF PARTICLE SIZE ($\mu$m) | 0.02 | 0.02 | 0.1 | 0.01 | 0.002 | 0.02 | 2 | 0.02 | 0.02 |
| | PRESSURE RESISTANCE(MPa) | 0.5 | 0.5 | 0.3 | 0.5 | 2.9 | 0.5 | 0.5 | 0.5 | 0.5 |
| | HYDROPHIUC RESIN | PVP | PVP | PVP | PVA | PVP | PVP | PVA | PVP | PVP |
| | CROSSUNKING TREATMENT | YES | YES | YES | YES | YES | NO | YES | NO | YES |
| | CONTACT ANGLE (°) OF WATER | 45 | 47 | 45 | 60 | 63 | 42 | 50 | 91 | 45 |
| | HYDROPHILIZING TREATMENT | ENTIRE MEMBRANE | ENTIRE MEMBRANE | ENTIRE MEMBRANE | ENTIRE MEMBRANE | ENTIRE MEMBRANE | ENTIRE MEMBRANE | ENTIRE MEMBRANE | NO | ENTIRE MEMBRANE |
| | MEMBRANE STRUCTURE | GRADIENT STRUCTURE | GRADIENT STRUCTURE | GRADIENT STRUCTURE | GRADIENT STRUCTURE | GRADIENT STRUCTURE | GRADIENT STRUCTURE | GRADIENT STRUCTURE | GRADIENT STRUCTURE | GRADIENT STRUCTURE |
| | OPPOSITE PORE SIZE($\mu$m) | 10 | 10 | 20 | 5 | 1 | 10 | 10 | 10 | 10 |
| | MATERIAL OF MEMBRANE | PVDF | PVDF | PVDF | PVA | PSF | PVDF | PVDF | PVDF | PVDF |

(continued)

| | | | EXAMPLE 1 | EXAMPLE 2 | EXAMPLE 3 | EXAMPLE 4 | EXAMPLE 5 | COMPARATIVE EXAMPLE 1 | COMPARATIVE EXAMPLE 2 | COMPARATIVE EXAMPLE 3 | COMPARATIVE EXAMPLE 4 |
|---|---|---|---|---|---|---|---|---|---|---|---|
| SEMIPERMEABLE MEMBRANE LAYER | SURFACE ON WHICH SEMIPERMEABLE MEMBRANE LAYER IS FORMED | | OUTER SURFACE | INNER SURFACE | OUTER SURFACE | OUTER SURFACE | INNER SURFACE | OUTER SURFACE | OUTER SURFACE | OUTER SURFACE | INNER SURFACE |
| | AQUEOUS SOLUTION OF POLYFUNCTIONAL AMINE COMPOUND | TYPE | AROMATIC | AROMATIC | AROMATIC | AROMATIC | AROMATIC | AROMATIC | AROMATIC | AROMATIC | AROMATIC |
| | | CONCENTRATION (% BY MASS) | 2 | 2 | 2 | 2 | 2 | 2 | 2 | 2 | 2 |
| | ORGANIC SOLVENT SOLUTION OF POLYFUNCTIONAL ACID HALIDE COMPOUND | TYPE | AROMATIC | AROMATIC | AROMATIC | AROMATIC | AROMATIC | AROMATIC | AROMATIC | AROMATIC | AROMATIC |
| | | CONCENTRATION (% BY MASS) | 0.2 | 0.2 | 0.2 | 0.2 | 0.2 | 0.2 | 0.2 | 0.2 | 0.2 |
| | | ORGANIC SOLVENT | HEXANE | HEXANE | HEXANE | HEXANE | HEXANE | HEXANE | HEXANE | HEXANE | HEXANE |
| | DRYING TEMPERATURE(°C) | | 90 | 90 | 90 | 90 | 90 | 90 | 90 | 90 | 90 |
| COMPOSITE HOLLOW FIBER MEMBRANE | OUTER DIAMETER(mm) | | 1.0 | 1.0 | 1.3 | 1.0 | 0.5 | 1.0 | 1.3 | 1.0 | 1.0 |
| | INNER DIAMETER(mm) | | 0.6 | 0.6 | 0.75 | 0.6 | 0.2 | 0.6 | 0.75 | 0.6 | 0.6 |
| | MEMBRANE THICKNESS(mm) | | 0.2 | 0.2 | 0.275 | 0.2 | 0.15 | 0.2 | 0.275 | 0.2 | 0.2 |

(continued)

| EVALUATION | | | EXAMPLE 1 | EXAMPLE 2 | EXAMPLE 3 | EXAMPLE 4 | EXAMPLE 5 | COMPARA-TIVE EXAM-PLE 1 | COMPARA-TIVE EXAM-PLE 2 | COMPARA-TIVE EXAM-PLE 3 | COMPARA-TIVE EXAM-PLE 4 |
|---|---|---|---|---|---|---|---|---|---|---|---|
| | RO | WATER PERMEABILITY(LMH) | 0.25 | 0.21 | 0.46 | 0.11 | 0.07 | 0.27 | - | 0.38 | >100 |
| | | DESALINATION RATIO(%) | 93.2 | 95.8 | 90.3 | 96.6 | 98.8 | 91.5 | - | 90.8 | 0 |
| | FO | WATER PERMEABILITY (LMH) | 4.67 | 4.22 | 7.67 | 2.67 | 0.88 | 4.55 | - | 0.97 | - |
| | | SALT BACKFLOW RATE(gMH) | 0.27 | 0.21 | 1.12 | 0.16 | 0.11 | 0.34 | - | 2.23 | - |
| | RO AFTER BEING BENT 10 TIMES | DESALINATION RATIO(%) | 92.6 | 95.2 | 88.6 | 96.3 | 92.8 | 87.8 | - | 34.1 | - |
| | | DESALINATION RATIO (%° AFTER BEING IMMERSED IN WATER | 92.8 | 94.6 | 85.1 | 94.1 | 89.8 | 65.2 | - | - | - |

The parts having "-" for the evaluation in Table 1 indicate that the composite hollow fiber membrane did not function as a forward osmosis membrane or a reverse osmosis membrane. In Table 1, "> 100" indicates that the value is larger than 100.

As can be seen from Table 1, when the composite hollow fiber membrane is a composite hollow fiber membrane including a semipermeable membrane layer containing a crosslinked polyamide polymer obtained by polymerizing a polyfunctional amine compound and a polyfunctional acid halide compound; and a supporting layer that has a hollow fiber shape and is porous, wherein the supporting layer has a gradient structure having a cut-off particle size of 0.001 to 0.3 $\mu$m and contains a hydrophilic resin that is crosslinked, and the semipermeable membrane layer is in contact with the dense surface (Examples 1 to 5), the composite hollow fiber membrane is excellent in water permeability and desalination performance in use as a reverse osmosis membrane. The composite hollow fiber membranes according to Examples 1 to 5 were excellent in water permeability and had a low salt backflow rate even when used as a forward osmosis membrane. These prove that the composite hollow fiber membranes according to Examples 1 to 5 can suitably perform the separation by a semipermeable membrane layer. This is presumably because a semipermeable membrane layer can be suitably formed on the supporting layer, and further the supporting layer is less likely to impair the separation by the formed semipermeable membrane layer.

Further, the composite hollow fiber membranes according to Examples 1 to 5 had suppressed decrease in the desalination ratio even after being bent 10 times or even after being passed through by water for a long time and being bent 10 times, and thus the composite hollow fiber membranes were proved to be excellent in durability. This is presumably because the suitably formed semipermeable membrane layer is less likely to suffer damage such as peeling off from the supporting layer due to being bend or the like.

Meanwhile, the composite hollow fiber membrane according to Comparative Example 1, on which the crosslinking treatment was not performed, contains a hydrophilic resin on the supporting layer, and thus it is conceivable that a semipermeable membrane layer can be suitably fonned on the supporting layer, and the composite hollow fiber membrane can have suppressed decrease in desalination ratio even after being bent 10 times. However, the composite hollow fiber membrane did not have sufficiently suppressed decrease in desalination ratio after being passed through by water for a long time and being bent 10 times. This is presumably because the hydrophilic resin was not crosslinked, thus the hydrophilic resin was eluted from the supporting layer by passing of water, and the formed semipermeable membrane layer suffered damage such as peeling off from the supporting layer due to being bend or the like.

When the supporting layer has a cut-off particle size of more than 0.3 $\mu$m (Comparative Example 2), the diameter of pores present on the dense surface was too large, a semipermeable membrane layer was presumably not suitably formed, and the separation by a semipermeable membrane layer was not suitably performed. In Table 1, "-" for the evaluation of Comparative Example 2 indicates that the composite hollow fiber membrane did not function as a forward osmosis membrane or a reverse osmosis membrane.

The composite hollow fiber membrane according to Comparative Example 3, on which the crosslinking treatment was not performed and further from which the hydrophilic resin was eluted, has a hydrophobic supporting layer, thus presumably suffered damage such as peeling off of the semipermeable membrane layer from the supporting layer, and did not have sufficiently suppressed decrease in desalination ratio after being bent 10 times. The desalination ratio after being passed by water for a long time and being bent 10 times was not measured because the result is naturally bad. Thus, "-" is shown for the evaluation.

When the semipermeable membrane layer was formed on the surface opposite to the dense layer of the supporting layer (Comparative Example 4), the diameter of pores present on the surface on which the semipermeable membrane layer was formed was too large, a semipermeable membrane layer was presumably not suitably formed, and the separation by a semipermeable membrane layer was not suitably performed, as described above. In Table 1, "-" for the evaluation of Comparative Example 4 indicates that the composite hollow fiber membrane did not function as a reverse osmosis membrane.

This application is based on Japanese Patent Application No. 2017-251938 filed on December 27, 2017, the contents of which are incorporated herein.

It is to be understood that though the present invention has been described appropriately and sufficiently through embodiments above to express the present invention, it is easy for a person skilled in the art to change and/or improve the above-mentioned embodiments. Therefore, unless a modification or improvement made by a person skilled in the art is not at a level that departs from the scope of the claims set forth in the claims, such a modification or improvement shall be construed as being included in the scope of the claims.

Industrial Applicability

The present invention provides a composite hollow fiber membrane that can suitably perform the separation by a semipermeable membrane layer and further has excellent durability, and a method for producing the composite hollow fiber membrane.

**Claims**

1. A composite hollow fiber membrane comprising:

   a semipermeable membrane layer; and
   a supporting layer that has a hollow fiber shape and is porous,
   wherein
   the semipermeable membrane layer contains a crosslinked polyamide polymer composed of a polyfunctional amine compound and a polyfunctional acid halide compound,
   the supporting layer has a gradient structure in which pores of the supporting layer gradually increase in size from one of an inner surface and an outer surface to the other, has a cut-off particle size of 0.001 to 0.3 $\mu$m, and contains a crosslinked hydrophilic resin on at least a dense surface having smaller pores of the inner surface and the outer surface, and
   the semipermeable membrane layer is in contact with the dense surface of the supporting layer.

2. The composite hollow fiber membrane according to claim 1, wherein a contact angle of water on the dense surface is 90° or less.

3. The composite hollow fiber membrane according to claim 1 or 2, wherein the supporting layer has a pressure resistance of 0.3 MPa or more and less than 5 MPa.

4. The composite hollow fiber membrane according to any one of claims 1 to 3, wherein the hydrophilic resin is at least one of polyvinyl alcohol and polyvinyl pyrrolidone.

5. The composite hollow fiber membrane according to any one of claims 1 to 4, wherein the supporting layer contains at least one of polyvinylidene fluoride and polysulfone.

6. The composite hollow fiber membrane according to claim 5, wherein the supporting layer contains polyvinylidene fluoride.

7. The composite hollow fiber membrane according to any one of claims 1 to 6, wherein the supporting layer is entirely hydrophilized.

8. The composite hollow fiber membrane according to any one of claims 1 to 7, which is a forward osmosis membrane used in forward osmosis method.

9. A method for producing the composite hollow fiber membrane according to any one of claims 1 to 8, the method comprising the steps of:

   contacting an aqueous solution of the polyfunctional amine compound with the dense surface side of the supporting layer;
   further contacting an organic solvent solution of the polyfunctional acid halide compound with the dense surface side of the supporting layer that has been contacted with the aqueous solution of the polyfunctional amine compound; and
   drying the supporting layer that has been contacted with the aqueous solution of the polyfunctional amine compound and the organic solvent solution of the polyfunctional acid halide compound.

EP 3 733 269 A1

# FIG. 1

R1

R2

T

A

11

24

FIG. 2

# FIG. 3

FIG. 4

FIG. 5

FIG. 6

# FIG. 7

## INTERNATIONAL SEARCH REPORT

| International application No. |
| --- |
| PCT/JP2018/046462 |

**A. CLASSIFICATION OF SUBJECT MATTER**

Int.Cl. B01D69/08(2006.01)i, B01D69/02(2006.01)i, B01D69/10(2006.01)i, B01D69/12(2006.01)i, B01D71/34(2006.01)i, B01D71/38(2006.01)i, B01D71/44(2006.01)i, B01D71/56(2006.01)i, B01D71/68(2006.01)i, B32B5/18(2006.01)i, B32B27/34(2006.01)i, C08G69/26(2006.01)i

According to International Patent Classification (IPC) or to both national classification and IPC

**B. FIELDS SEARCHED**

Minimum documentation searched (classification system followed by classification symbols)

Int.Cl. B01D69/08, B01D69/02, B01D69/10, B01D69/12, B01D71/34, B01D71/38, B01D71/44, B01D71/56, B01D71/68, B32B5/18, B32B27/34, C08G69/26

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | US 2014/0175006 A1 (CHEIL INDUSTRIES INC.) 26 February 2014, claims, paragraphs [0035]-[0068], fig. 2 & KR 10-2014-0082532 A & CN 103894067 A | 1-9 |
| Y | JP 9-512857 A (MILLIPORE CORPORATION) 22 December 1997, claims, page 6, line 3 to page 11, line 16 & US 5629084 A, claims, column 2, line 49 to column 4, line 38 & WO 1996/003202 A1 & EP 772488 A1 & DE 69520042 T2 & CN 1159770 A & KR 10-0378500 B1 | 1-9 |

☒ Further documents are listed in the continuation of Box C.  ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 27 February 2019 (27.02.2019) | 12 March 2019 (12.03.2019) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| International application No. |
| --- |
| PCT/JP2018/046462 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2015/146469 A1 (KURARAY CO., LTD.) 01 October 2015 & US 2018/0169590 A1 & EP 3103546 A1 & CN 106132521 A & KR 10-2016-0136430 A | 1-9 |
| A | WO 2016/114051 A1 (KURARAY CO., LTD.) 21 July 2016 (Family: none) | 1-9 |
| A | WO 2014/133133 A1 (TORAY INDUSTRIES, INC.) 04 September 2014 (Family: none) | 1-9 |
| A | WO 2014/050701 A1 (TORAY INDUSTRIES, INC.) 03 April 2014 & US 2015/0343393 A1 & EP 2902095 A1 & CN 104619403 A & KR 10-2015-0060732 A | 1-9 |

Form PCT/ISA/210 (continuation of second sheet) (January 2015)

**EP 3 733 269 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000015067 A
- JP 2013545593 W

- JP 2017251938 A